# EUROPEAN PATENT APPLICATION

(11) **EP 4 400 931 A1**
(43) Date of publication of application: **17.07.2024**
(21) Application number: 21963996.0
(22) Date of filing: 10.11.2021
(51) Int. Cl.: G05D 1/02

(54) **TRANSPORT SYSTEM AND TRANSPORT CONTROL METHOD**

(71) Applicant: Lexxpluss, Inc., Kawasaki-ku, Kawasaki City Kanagawa 2100007 (JP)
(72) Inventor: ASO Masaya, Kawasaki-shi, Kanagawa 210-0007 (JP)
(74) Representative: Hasegawa, Kan
(86) International application number: PCT/JP2021/041340
(87) International publication number: WO 2023/084637

(57) **Abstract**

[Problems] A conveyance system and a conveyance control method are provided that can achieve at least one of the following: enabling the continuation of conveyance operation when not detecting any guide line, and discovering the abnormality that the automated guided vehicles fail to detect any guide line.

[Solution] A conveyance system comprising a conveyance vehicle that conveys an object to be conveyed and a control device that controls operation of the conveyance vehicle, wherein the conveyance vehicle includes a guide line detecting unit that detects a guide line laid along a travel route; a travel controlling unit that makes the conveyance vehicle travel along the guide line; and an own conveyance vehicle position estimating unit that estimates a position of an own conveyance vehicle; and the control device includes a recording unit that records map information including position information of the guide line; and makes the conveyance vehicle travel to the guide line in the map information, when the position of the own conveyance vehicle estimated by the own conveyance vehicle estimating unit is more than a predetermined distance away from the position of the guide line in the map information.

## Description

### [TECHNICAL FIELD]

The present disclosure relates to a conveyance system and a conveyance control method.

### [BACKGROUND ART]

In recent years, autonomous automated guided vehicles for conveying goods within facilities such as factories and warehouses have been utilized in a practical manner. For example, Patent Literature 1 discloses control technology that the automated guided vehicles travel in two sections, where the automated guided vehicles travel to predetermined target positions along a predetermined guide line laid in the facilities in a line-following section, and the automated guided vehicles travel autonomously by using autonomous navigation in an autonomous section.

### [PRIOR ART LIST]

### Patent Literature

Patent Literature 1: Japanese Unexamined Patent Application Publication No. 2012-89078

### [SUMMARY OF THE INVENTION]

### [TECHNICAL PROBLEM]

The technology described in Patent Literature 1 discloses that when traveling in the autonomous section, the automated guided vehicles travel autonomously along predetermined straight routes to a next guide line. However, the automated guided vehicles, if failing to detect the guide line, lose directions to travel, which disables the continuation of conveyance operation. In addition, the abnormality cannot be discovered that the automated guided vehicles fail to detect the any guide line.

The present disclosure is made in view of at least one of the above problems, and the purpose thereof is to provide a conveyance system and a conveyance control method that can achieve at least one of the following: enabling the continuation of conveyance operation when not detecting any guide line, and discovering the abnormality that the automated guided vehicles fail to detect any guide line.

### [TECHNICAL SOLUTION]

According to the present disclosure, a conveyance system is provided that comprises a conveyance vehicle that conveys an object to be conveyed and a control device that controls operation of the conveyance vehicle, wherein the conveyance vehicle includes a guide line detecting unit that detects a guide line laid along a travel route; a travel controlling unit that makes the conveyance vehicle travel along the guide line; and an own conveyance vehicle position estimating unit that estimates a position of an own conveyance vehicle; and the control device includes a recording unit that records map information including position information of the guide line; and makes the conveyance vehicle travel to the guide line in the map information, when the position of the own conveyance vehicle estimated by the own conveyance vehicle estimating unit is more than a predetermined distance away from the position of the guide line in the map information.

According to the present disclosure, a conveyance system is provided that comprises a conveyance vehicle that conveys an object to be conveyed and a control device that controls operation of the conveyance vehicle, wherein the conveyance vehicle includes a guide line detecting unit that detects a guide line laid along a travel route; a travel controlling unit that makes the conveyance vehicle travel along the guide line; and an own conveyance vehicle position estimating unit that estimates a position of an own conveyance vehicle; and the control device includes a recording unit that records map information including position information of the guide line; and an abnormality judging unit that detects an abnormality when the guide line detecting unit does not detect the guide line and the position of the own conveyance vehicle estimated by the own conveyance vehicle estimating unit is within a predetermined distance of the position of the guide line in the map information, and the abnormality judging unit detects an abnormality of the guide line when different conveyance vehicles detect the abnormality at a position within a predetermined distance a plural of times.

According to the present disclosure, a conveyance system is provided that comprises a conveyance vehicle that conveys an object to be conveyed and a control device that controls operation of the conveyance vehicle, wherein the conveyance vehicle includes a guide line detecting unit that detects a guide line laid along a travel route; a travel controlling unit that makes the conveyance vehicle travel along the guide line; and an own conveyance vehicle position estimating unit that estimates a position of an own conveyance vehicle; and the control device includes a recording unit that records map information including position information of the guide line; and an abnormality judging unit that detects an abnormality when the guide line detecting unit does not detect the guide line and the position of the own conveyance vehicle estimated by the own conveyance vehicle estimating unit is within a predetermined distance of the position of the guide line in the map information, and the abnormality judging unit detects an abnormality of a specific conveyance vehicle when an abnormality is detected in the specific conveyance vehicle a plurality of times.

According to the present disclosure, a conveyance system is provided that comprises a conveyance vehicle that conveys an object to be conveyed and a control device that controls operation of the conveyance vehicle, wherein the conveyance vehicle includes a guide line detecting unit that detects a guide line laid along a travel route; a travel controlling unit that makes the conveyance vehicle travel along the guide line; an own conveyance vehicle position estimating unit that estimates a position of an own conveyance vehicle; and an obstacle detecting unit that detects an obstacle, and the control device includes a recording unit that records map information including position information of the guide line; and when the position information of the guide line detected by the conveyance vehicle is accumulated more than a predetermined amount, updates the position information of the guide line in the map information based on the accumulated position information.

According to the present disclosure, a conveyance method of a conveyance vehicle that conveys an object to be conveyed is provided that comprises: a step of detecting a guide line laid along a travel route; a step of making the conveyance vehicle travel along the guide line; a step of estimating a position of an own conveyance vehicle; and a step of recording map information including position information of the guide line, wherein the conveyance vehicle is made to travel to the guide line in the map information, when the position of the own conveyance vehicle estimated by the step of estimating is more than a predetermined distance away from the position of the guide line in the map information.

According to the present disclosure, a conveyance method of a conveyance vehicle that conveys an object to be conveyed is provided that comprises: a step of detecting a guide line laid along a travel route; a step of making the conveyance vehicle travel along the guide line; a step of estimating a position of an own conveyance vehicle; a step of recording map information including position information of the guide line; and a step of detecting an abnormality when the step of detecting the guide line does not detect the guide line and the position of the own conveyance vehicle estimated by the step of estimating is within a predetermined distance of the position of the guide line in the map information, wherein the step of detecting the abnormality detects an abnormality of the guide line when different conveyance vehicles detect the abnormality at a position within a predetermined distance a plural of times.

According to the present disclosure, a conveyance method of a conveyance vehicle that conveys an object to be conveyed is provided that comprises: a step of detecting a guide line laid along a travel route; a step of making the conveyance vehicle travel along the guide line; a step of estimating a position of an own conveyance vehicle; and a step of recording map information including position information of the guide line; a step of detecting an abnormality when the step of detecting the guide line does not detect the guide line and the position of the own conveyance vehicle estimated by the step of estimating is within a predetermined distance of the position of the guide line in the map information, wherein the step of detecting the abnormality detects an abnormality of a specific conveyance vehicle when an abnormality is detected in the specific conveyance vehicle a plurality of times.

According to the present disclosure, a conveyance method of a conveyance vehicle that conveys an object to be conveyed is provided that comprises: a step of detecting a guide line laid along a travel route; a step of making the conveyance vehicle travel along the guide line; a step of estimating a position of an own conveyance vehicle; a step of detecting an obstacle; and a step of recording map information including position information of the guide line, wherein when the position information of the guide line detected by the conveyance vehicle is accumulated, the position information of the guide line in the map information is updated based on the accumulated position information.

### [ADVANTAGEOUS EFFECTS]

According to the present disclosure, the conveyance system and the conveyance control method can accomplish at least one of the following: enabling the continuation of conveyance operation when not detecting any guide line, and identifying the cause that the automated guided vehicles fails detect any guide line.

### [BRIEF DESCRIPTION OF THE DRAWING]

Fig. 1 is a perspective view showing an example of the hardware configuration of the conveyance vehicle according to the embodiment.
Fig. 2 is a bottom view showing an example of the hardware configuration of the conveyance vehicle according to the embodiment.
Fig. 3 shows an example of the hardware configuration of the conveyance vehicle and the cart connected thereto according to the embodiment.
Fig. 4 shows another example of the hardware configuration of the conveyance vehicle and the cart connected thereto according to the embodiment.
Fig. 5 shows an example of the configuration of the conveyance operation area according to the embodiment.
Fig. 6 shows the positional relationship between the guide line and the conveyance vehicle when the two-dimensional code composed in the guide line is detected by the guide line detecting unit.
Fig. 7 is a bottom view showing the positional relationship between the guide line and the conveyance vehicle when the magnetic tape composed in the guide line is detected by the guide line detecting unit.
Fig. 8 shows an example of the overall configuration diagram of the conveyance system according to the embodiment.
Fig. 9 is a configuration diagram of the supervisory control device according to the embodiment.
Fig. 10 shows a functional configuration diagram of the conveyance vehicle according to the embodiment.
Fig. 11 is a flowchart showing the control flow of preparing maps according to the embodiment.
Fig. 12 is a flowchart showing the flow of updating map information according to the embodiment.
Fig. 13 is a flowchart showing the flow of judging abnormality according to the embodiment.
Fig. 14 is a flowchart showing another flow of judging abnormality according to the embodiment.

### [DETAILED DESCRIPTION OF THE EMBODIMENTS]

Hereinafter, the embodiment of the present disclosure will be described with reference to the drawings. Duplicated explanations in the specification and the drawings will be omitted on components having substantially identical functional configurations, by applying the same symbols thereto.

### <Example 1>

In logistics warehouses and manufacturing plants, conveyed objects such as carts and pallets are required to stop in predetermined positions, in predetermined directions, and in predetermined manners to coordinate the conveyed objects with on-site work. For example, to permit workers to take conveyed objects from conveyance vehicles without moving, the conveyed objects are required to stop at the positions for linking to belt conveyors, or to be laid down beside the workers' work positions. The conveyed objects are required to be accurately conveyed to coordinate with the above belt conveyors or to lie down beside the above workers' work positions.

The conventional autonomous traveling system (a system that detects obstacles with obstacle detecting sensors using laser beams to autonomously travel avoiding the obstacles) fail to accurately convey; time and effort are required for installing an alternative system that the conveyance vehicles stop at predetermined positions, in predetermined directions, and in predetermined manners. In a guidance system (a system that the conveyance vehicles travel along guide lines laid on the traveling road surface), the guide lines must be laid on the traveling road surface, where laying the guide lines may disturb on-site work, or the on-site work may be required to change to protect the guide lines. Changing the travel routes is not easy after laying the guide lines that the magnetic guide lines are embedded in the road surface.

Therefore, it is desirable that an area, in which accurate conveyance is required for stopping in a predetermined manner and for cooperating with other device such as a belt conveyor, should be defined as the guided traveling area, where the guide lines should be laid to permit the conveyance vehicles to travel according to the guidance system; and other area should be defined as the autonomous traveling area, where the conveyance vehicles travel without any guide line toward the destinations specified by the autonomous traveling system based on the map information acquired in advance.

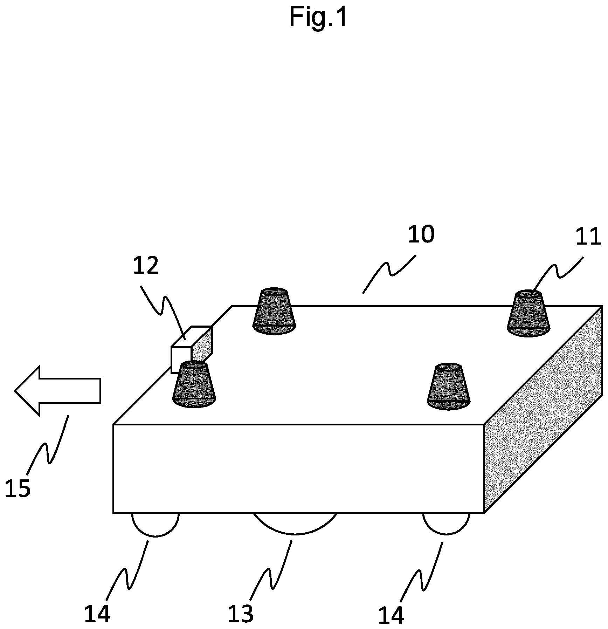

The hardware configuration of the conveyance vehicle and the cart will be explained with reference to Figs. 1 to 4. Fig. 1 is a perspective view showing an example of the hardware configuration of the conveyance vehicle according to the embodiment. In Fig. 1, the arrow 15 indicates the traveling direction of the conveyance vehicle. As shown in Fig. 1, the conveyance vehicle includes connecting units 11 for switching between a connecting state and a disconnecting state with the cart, an object position detecting unit 12 for detecting objects around the conveyance vehicle, driving wheel 13, and non-driving wheel 14.

On the top side of the conveyance vehicle, the connecting units 11 and the object position detecting unit 12 are mounted. The connecting units 11, which have actuators for example, are configured so that when connecting with the cart, the actuators can extend upward to connect with the connection receiving parts (not shown) on the cart side, and when disconnecting, the actuators can retract to disconnect between the connecting units 11 and the connection receiving parts on the cart side. The connecting units 11 are arranged at four locations surrounding the driving wheel 13 of the conveyance vehicle on the plane, and are connectable to the cart at the four locations. In lieu of the four connecting units, other number of connecting units, for example, any one or more connecting units are available.

The object position detecting unit 12 is a device that detects the distance from the conveyance vehicle to an object. The object position detecting unit 12 is, for example, as below: a laser distance sensor (such as LiDAR (Light detection and ranging)) that measures the distance and direction to the object by irradiating a laser beam and measuring the time of returning from the object; a millimeter wave radar that detects the distance to the object based on millimeter wave transmission signals and reception signals reflected from the object and returned; and a camera-type distance sensor that measures the distance to the object by capturing the object with a camera and analyzing the captured image. In lieu of arranging the object position detecting unit 12 in front of the upper surface of the conveyance vehicle in the traveling direction in the embodiment, arranging on the front side of the conveyance vehicle in the traveling direction may be available. In addition to the front of the conveyance vehicle, arranging on the rear side of the conveyance vehicle in the traveling direction or arranging on both the left and right sides thereof may be available.

The object position detecting unit 12 may be configured to detect the object with respect to 360 degrees around the conveyance vehicle, which may be configured to detect the object at least in the traveling direction 15 of the conveyance vehicle.

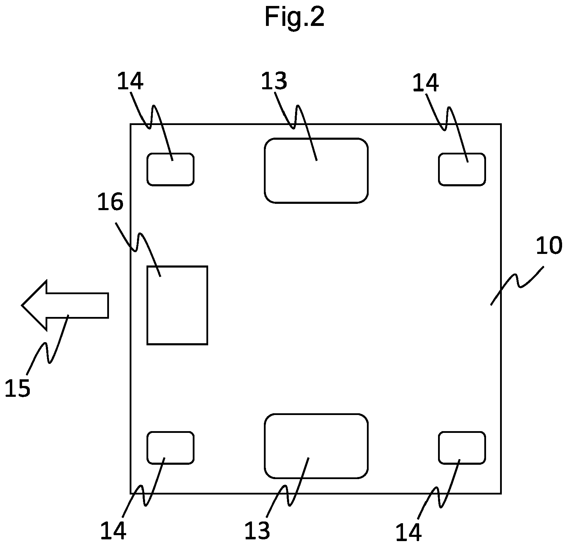

Fig. 2 is a bottom view showing an example of the hardware configuration of the conveyance vehicle according to the embodiment. On the bottom surface of the conveyance vehicle, the driving wheels 13 are arranged at the positions on both the left and right sides related to the traveling direction 15 of the conveyance vehicle, while non-driving wheels 14 are arranged at the positions in front of and behind each of the driving wheels 13. The driving wheels 13 are driven by being connected to the rotating shaft of a motor, where the right side driving wheel and the left side driving wheel are controlled individually, and individually controlling the speed and direction of rotation of each driving wheel enables the conveyance vehicle to travel in a curve and to rotate on the current spot to change direction. The non-driving wheels 14, which have wheels that are not driven, rotate passively as the conveyance vehicle is moved by the driving wheels 13. The non-driving wheels 14 have, for example, forks that fix the wheels and axles, and the forks are composed of rotating casters that are rotatably connected to the bottom member of the conveyance vehicle. Therefore, the rotating direction of the non-driving wheels 14 changes passively in response to the traveling direction and rotating movement of the conveyance vehicle. In lieu of the conveyance vehicle that has the two driving wheels and the four non-driving wheels shown in Fig. 2, another conveyance vehicle is available that has two driving wheels and two non-driving wheels, and a modified conveyance vehicle is available that the front wheels serve for steering in the four-wheel configuration.

On the bottom of the conveyance vehicle are arranged the guide line detecting unit 16 that detects the guidance lines. The guide line detecting unit 16 is preferably arranged ahead of the driving wheels 13 in the traveling direction of the conveyance vehicle. Thus, the conveyance vehicle, when traveling along a curved guide line, can easily travel following the curved guide line, while it can quickly stop by quickly receiving information from a guide line when the conveyance vehicle and the cart travel. The guide line detecting unit 16 may utilize sensors corresponding to the types of the above guidance systems. As a sensor of the guide line detecting unit 16, a pickup coil is used for the electromagnetic induction system, a magnetic sensor is used for the magnetic induction system, and a camera is used for the image recognizing system.

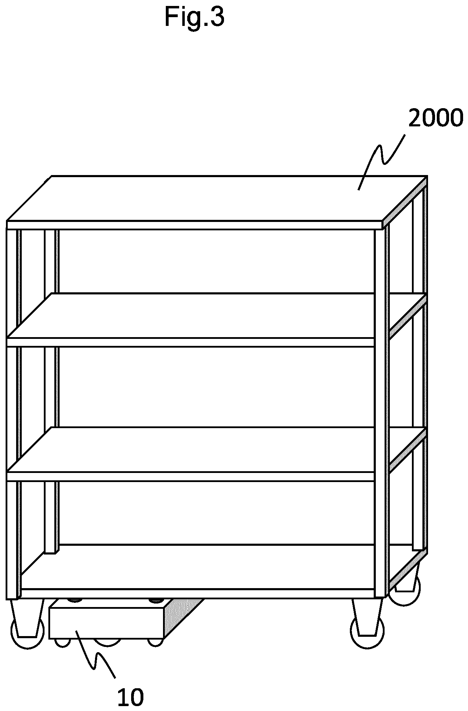

Fig. 3 shows an example of the hardware configuration of the conveyance vehicle and the cart connected thereto according to the embodiment, and more specifically, shows an example where the conveyance vehicle 10 is connected to the cart, which is an object to tow, thereunder. A mortar-shaped connection receiver is arranged on the bottom of the cart at the position corresponding to the conical-shaped connecting unit 11, and the connecting unit 11 can extend upward to connect to the cart and can retract to disconnect therefrom.

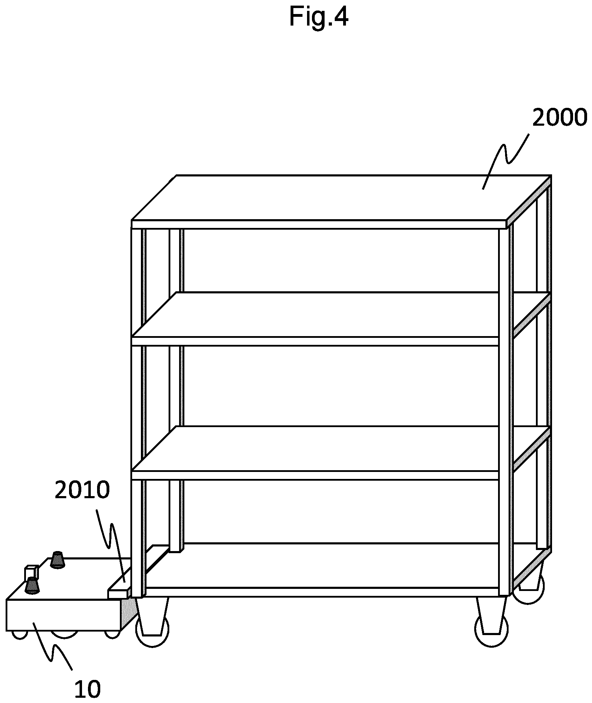

Fig. 4 shows another example of the hardware configuration of the conveyance vehicle and the cart connected thereto according to the embodiment. In Fig. 4, the conveyance vehicle is connected to the towing cart 2000 at the position next to the cart 2000. The cart is provided with a connection receiving unit 2010 that connects to at least a portion of the connecting unit 11 of the conveyance vehicle, and the conveyance vehicle can connect to the cart through upward extension of the connecting unit 11 and can disconnect therefrom through retraction of the connecting unit 11. As shown in Figs. 3 and 4, the conveyance vehicle connects to and disconnect from the the cart through vertical extension and retraction of the connecting unit 11, for example, actuator, on the top surface of the conveyance vehicle; however, the conveyance vehicle connect to and disconnects from the cart via other methods. The conveyed object that is connected to the conveyance vehicle is the cart; however, the conveyed object may also be, for example, a pallet or cabinet without wheel. When conveying the pallet or cabinet, the conveyance vehicle connects to the pallet or cabinet by lifting the pallet or cabinet at the position under the pallet or cabinet.

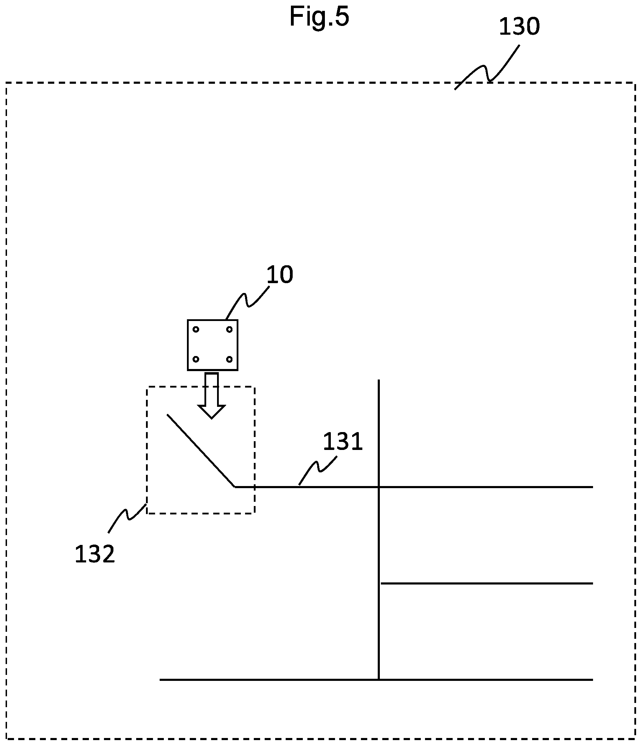

Fig. 5 shows an example of the configuration of the operation area 130. As shown in Fig. 3, in the operation area 130 is laid the guide line 131, and when the conveyance vehicle, which travels in the autonomous travel mode, detects the guide line 131 at the predetermined travel mode switching position 132, the travel control mode is switched from the autonomous travel mode to the guided travel mode. In contrast, when the conveyance vehicle, which travels along the guide lines in the guided travel mode enters the predetermined travel mode switching position 132, the travel control mode is switched from the guided travel mode to the autonomous travel mode. To guide the conveyance vehicle to the proximity of a shelf loaded with cargos, a belt conveyor, or the work position of workers, the trail or path composed of the guide line 131 is laid in the proximity to the shelf or work position via plural branching points.

A conveyance vehicle 10, which travels in an autonomous traveling area without guide line in the autonomous travel mode, enters the travel mode switching position 132, thereby the travel control mode is changed to the guided travel mode, in which the conveyance vehicle 10 follows the guide line under the condition of detecting the guide line 131. On the other hand, when the conveyance vehicle, which travels along the guide line in the guided travel mode, enters the travel mode switching position 132, the travel control mode is switched from the guided travel mode to the autonomous travel mode, whereby the conveyance vehicle leaves the guide line, and starts to autonomously travel.

As the guide lines 111 and 131 shown in Fig. 5, various conventionally used guide methods can be applied, as described below. Specifically, for example, the electromagnetic induction method, the magnetic induction method, and the image recognition method are applied. The electromagnetic induction method detects with a pickup coil on the cart side, a magnetic field generated with a weak alternating current passing through a metal wire installed as the guide line. The magnetic induction method reads with a magnetic sensor on the cart side, a magnetic tape laid on the floor surface as the guide line. The image recognition method captures and processes with a camera on the conveyance vehicle side, an image of a code (bar code, two-dimensional code, for example) laid on the floor as the guide line.

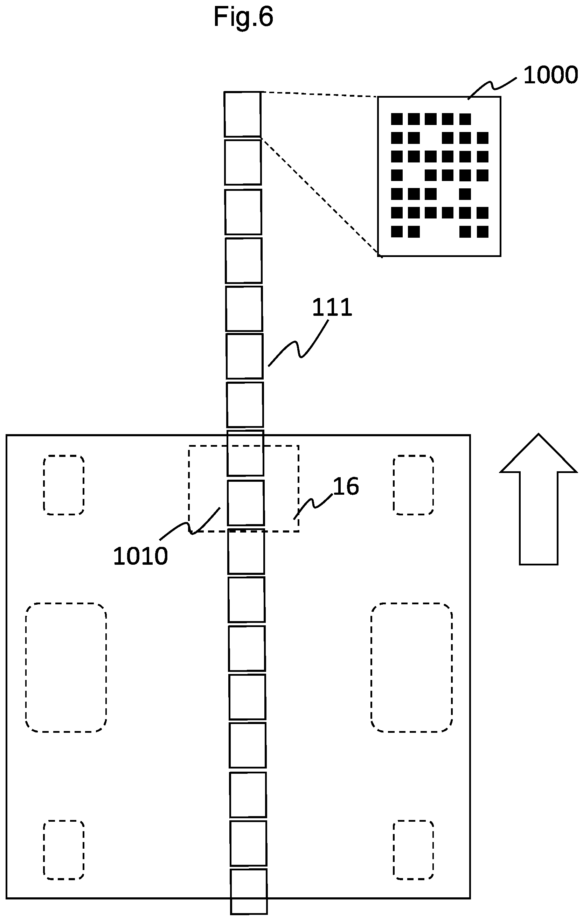

Fig. 6 shows the positional relationship between the guide line and the conveyance vehicle when the guide line detecting unit 16 detects the two-dimensional code that composes the guide line. The guide line has plural two-dimensional codes with code information printed on a two-dimensional plane as shown in the two-dimensional code 1000, where the plural two-dimensional codes are printed in a line toward the direction in which the guide line is laid. When detecting the two-dimensional code, the guide line detecting unit 16 acquires the location information of the two-dimensional code based on the code information given from the two-dimensional code.

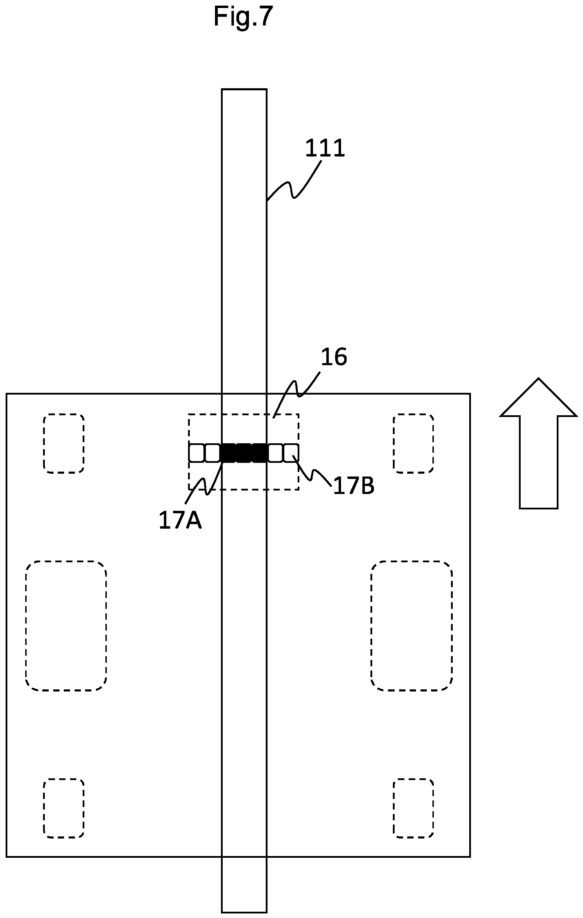

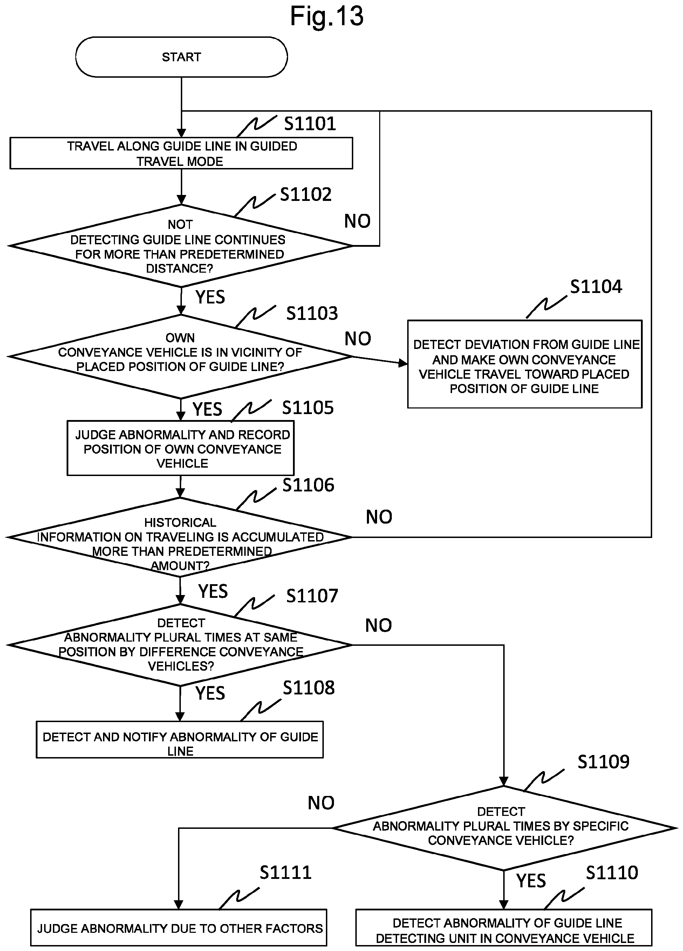

Fig. 7 shows the positional relationship between the guide line and the conveyance vehicle when the guide line detecting unit 16 detects the magnetic tape that composes the guide line. The guide line detecting unit 16 shown in Fig. 13 includes plural magnetic sensors 17 that detect a magnetic tape, where the plural magnetic sensors 17 are arranged in the direction perpendicular to the traveling direction of the conveyor vehicle. The plural magnetic sensors 17 in the guide line detecting unit 16 each output a detection signal indicating whether or not a magnetic tape is detected. In Fig. 7, three magnetic sensors 17A, which are located in the center of the guide line detecting unit 16, detect the magnetic tape, while two magnetic sensors 17B on each side of the guide line detecting unit 16 do not detect the magnetic tape.

### <Configuration of the conveyance system>

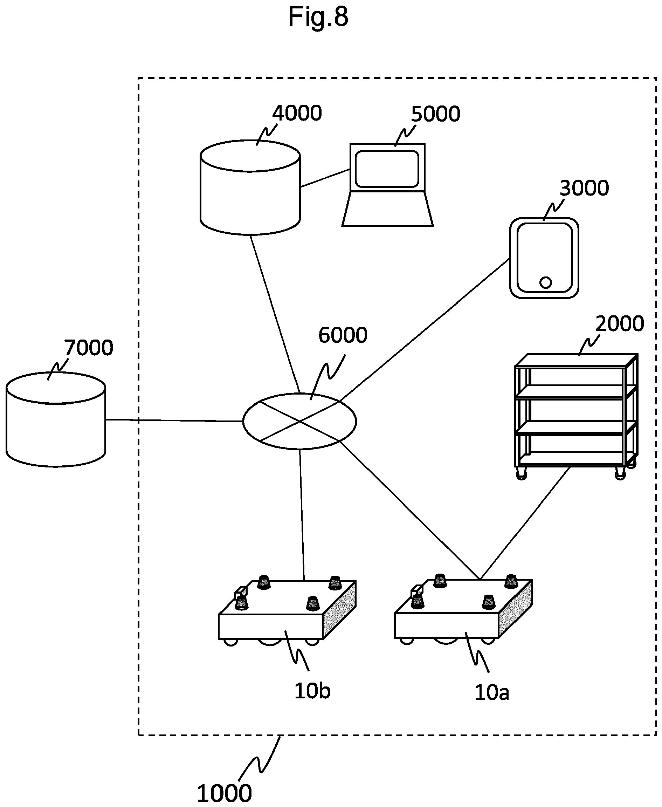

Next, the configuration of the conveyance system according to the embodiment will be described. Fig. 8 shows an example of the overall configuration diagram of the conveyance system according to the embodiment. The conveyance system 1000 includes plural conveyance vehicles (10a, 10b), a cart 2000 that is a conveyed object, a control device 3000 that displays the status of the conveyance vehicles and acts for inputting commands to the conveyance vehicles, a supervisory control device 4000 that manages information necessary for the operation of the conveyance vehicles, an I/O device 5000 that displays information from the supervisory control device 4000 and act for inputting information to the supervisory control device 4000, and a communication network 6000 that connects the conveyance vehicles (10a, 10b), the control device 3000, and the supervisory control device 4000 each other to establish communication thereamong.

The conveyance system 1000 is also connectable to an external system 7000 via the communication network 6000. When the conveyance system 1000 is installed in a manufacturing plant to convey parts required for manufacturing from a storage to a manufacturing line, the conveyance system 1000 is connected to a manufacturing management system that is the external system 7000. When information on the operational progress of the manufacturing operation is provided from the manufacturing management system, the conveyance amount and the conveyance route of the conveyance vehicles can be dynamically adjusted according to the operational progress of the manufacturing operation.

As another example, when the conveyance system 1000 is installed in a logistics warehouse to convey cargos brought by truck or the like from a loading entrance to a storage, and to convey cargos from a storage to an unloading exit, the conveyance system 1000 connects to the logistics management system that is the external system 7000.

Since generally the plural conveyance vehicles (10a, 10b) operate in a facility where the conveyance system is installed, each conveyance vehicle connects for establishing communication, to other conveyance vehicles and other components through the communication network 6000. For example, a conveyance vehicles transmits various detection information detected by its own detecting unit and other control information to the control device 3000, the supervisory control device 4000, and the other conveyance vehicles 10. The conveyance vehicle 10 also connects to the cart 2000 electrically or communicatively via short-range communication method, and receives from the cart, information on status of the connection and information on identification of the cart.

The control device 3000 has a function for displaying status information of a designated conveyance vehicle and a function for inputting commands to the designated conveyance vehicle. For example, the status information of the conveyance vehicle displayed on the control device 3000 includes information on the charge level of the battery that is mounted on the conveyance vehicle as the power source for the conveyance vehicle, and identification information on the cart that is connected to the conveyance vehicle. Commands inputted to the conveyance vehicle include, for example, command information on the destination of the conveyance vehicle, operation commands for connecting or disconnecting the conveyance vehicle and the cart, operation commands for starting the conveyance vehicle's traveling, stop commands for stopping the conveyance vehicle's traveling, and return commands for returning the conveyance vehicle to the charging station.

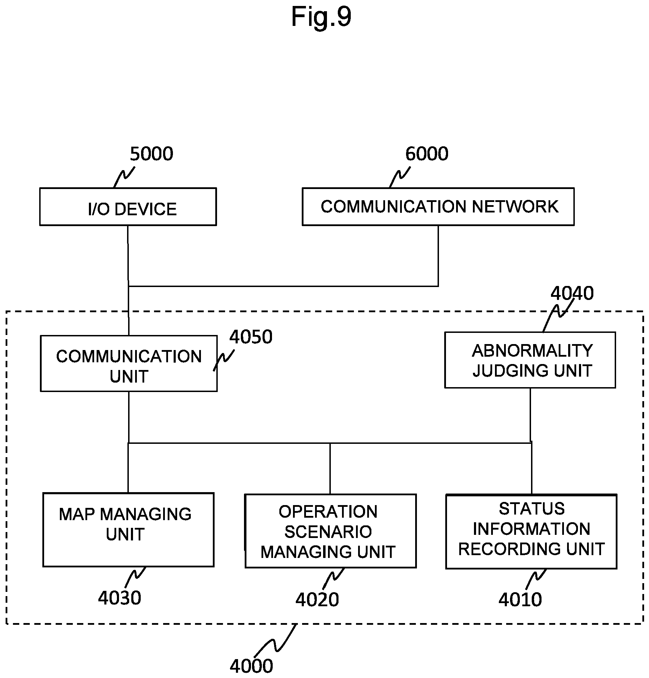

Fig. 9 is a configuration diagram of the supervisory control device 4000 according to the embodiment. The supervisory control device 4000 includes a status information recording unit 4010, an operation scenario managing unit 4020, a map managing unit 4030, an abnormality judging unit 4040, and a communication unit 4050. The status information recording unit 4010 records status information of the plural conveyance vehicles operated in a facility area. The operation scenario managing unit 4020 manages operation scenarios of the plural conveyance vehicles. The map managing unit 4030 prepares and updates a map of an operation area based on detection information of the conveyance vehicles, including detection information of guide line given by the guide line detecting units of the conveyance vehicles. The abnormality judging unit 4040 judges abnormality of the guide line and the conveyance vehicles based on the detection information of the conveyance vehicles. The communication unit 4050 communicates with the external I/O device 5000 and the communication network 6000.

The status information on the conveyance vehicle recorded in the status information recording unit 4010 includes, for example, historical information, identification information, operation mode, battery charge level information, various detection information, and map information. The historical information shows obstacle detection positions detected by the plural conveyance vehicles in operation, guide line detection positions, and traveling positions of the conveyance vehicles. The identification information shows the carts connected to the plural conveyor vehicles. The operation mode shows the operation of the plural conveyance vehicles (in the guide travel mode or in the autonomous travel mode.) The various other detection information is detected by the detecting unit 230 of the plural conveyance vehicles. The map information is related to the operation area. The operation scenarios, which are managed by the operation scenario managing unit 4020, include, for example, information on the destination of each of the plural conveyance vehicles, the contents of plural operations to be performed until reaching the destination, the operation sequence of the plural operations, and the switching conditions of the plural operations.

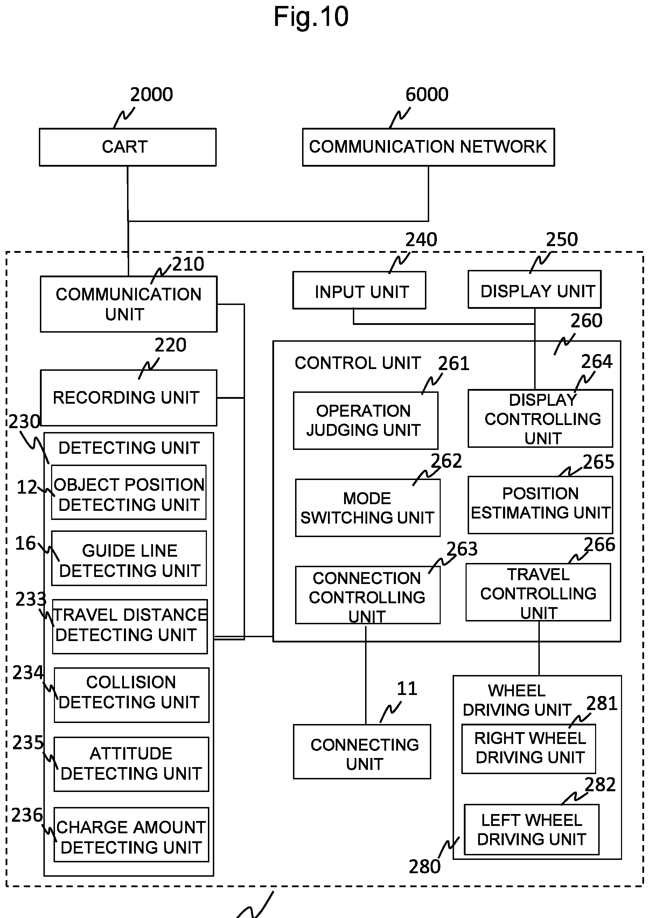

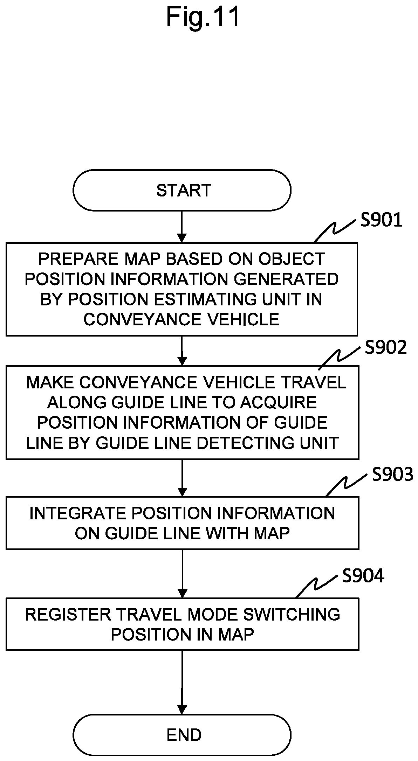

The map managing unit 4030 prepares a map including location information of obstacles and the guide line in the operation area, based on historical information of obstacle detection positions, guide line detection positions, and travel positions of the conveyance vehicles, detected by the conveyance vehicles. Furthermore, the map managing unit 4030 updates the location information of the guide line registered in the map, based on the information of the detection positions of the guide line accumulated by the one or more conveyance vehicles. The control flow for map preparing and map updating by the map managing unit 4030 will be described in detail with reference to Figs. 10 and 11 later.

The abnormality judging unit 4040 judges abnormalities of the guide line and the conveyance vehicles, based on the location information of the guide line registered in the map information and the detection information of the conveyance vehicles, including the detection position information of the guide line detected by the conveyance vehicles. The control flow for determining abnormalities of the guide line and the conveyance vehicles by the abnormality judging unit 4040 will be described in detail later.

The I/O device 5000 displays the information recorded in the status information recording unit 4010 of the supervisory control device 4000, the map information (including map update information), and judgment results by the abnormality judging unit, and also adds newly and updates operation scenarios through inputting the operation scenarios managed by the operation scenario managing unit 4020. The information fed into the I/O device 5000 includes, for example, that the destination of any conveyance vehicle is the operation area A of the guided travel area 110, and the operation contents and the operation switching conditions for entering the guided travel area 110 to reach the operation area A.

### <Functions of conveyance vehicles>

The function of the conveyance vehicle will be explained with reference to Fig. 10. Fig. 10 is a functional configuration diagram of the conveyance vehicle according to the embodiment. The conveyance vehicle 10 includes the communication unit 210 that communicates with the cart 2000 outside the conveyance vehicle and the communication network 6000, the recording unit 220, the detecting unit 230 provided with various sensors as described below, the connecting unit 11 for connecting to the cart, the wheel driving unit 280 that drives the wheels, the input unit 240, the display unit 250, and the control unit 260 that controls the operation of the wheel driving unit 280 and others.

The recording unit 220 has a function of recording information received from the outside by the communication unit 210, detection information detected by the detecting unit 230, and control information outputted by the control unit.

The detecting unit 230 has an object position detecting unit 12, a guide line detecting unit 16, a travel distance detecting unit 233, a collision detecting unit 234, an attitude detecting unit 235, and a charge amount detecting unit 236. The object position detecting unit 12 is, as described above, a laser distance sensor (for example, LiDAR (light detection and ranging)) that measures the distance and direction to an object by measuring the time taken for a laser beam to hit the object and return therefrom, a millimeter wave radar that detects the distance to an object based on the millimeter wave transmission signal and the received signal reflected back from the object, and a camera-type distance sensor that measures the distance to an object by capturing the object with a camera and analyzing the captured image.

For the guide line detecting unit 16 are used sensors according to the type of guide methods as described above. As the sensor in the guide line detecting unit, for the electromagnetic guide method is used a pickup coil, for the magnetic induction method is used a magnetic sensor, and for the image recognition method is used a camera. The guide line detecting unit detects the guide line to output a detection signal when being located directly over the guide line. For the image recognition method that uses a camera to read the guide line using a two-dimensional code or bar code, the guide line detecting unit prepares the position information based on the information of the detected code, in addition to the detection signal of the guide line, and implements image processing on the code, thereby generating relative angle information between the guide line and the conveyance vehicles.

The travel distance detecting unit 233 detects the number of rotations of the non-driving wheels 14 and the driving wheels 13, and measures the traveling distance of the conveyance vehicles, based on the detected information of the number of rotations and the diameters (or the circumference lengths) of the non-driving wheels and the driving wheels. Alternatively, by using a millimeter wave sensor that irradiates millimeter waves to the floor surface and detects the reflected waves, the travel distance detecting unit 233 detects the traveling speed of the conveyance vehicles, and estimates the traveling distance through integration of the traveling speed. The travel distance detecting unit 233 can acquire the traveling distance using any methods other than the above methods.

The collision detecting unit 234 has a function of detecting that a conveyance vehicle has collided with an object or person. Specifically, the collision detecting unit detects acceleration using a gyro sensor, and judges that a collision has occurred when detecting a sudden change in the acceleration. Alternatively, the collision detecting unit judges that a collision has occurred when a physical switch is pressed that is installed with the bumper in front of the conveyance vehicle in the traveling direction. The collision detecting unit can apply any collision detection methods other than the above collision methods. When detecting a collision, the collision detecting unit 234 stops the conveyance vehicle, records at least one of the collision occurrence information and the collision location into the recording unit, and notifies the above information to the supervisory control device 4000 and the control device 3000. The attitude detecting unit 235 detects the orientation (attitude) of the conveyance vehicle, based on information of the magnetic compass or the number of rotations of the left and right driving wheels, or on information of steering of the wheels.

The charge amount detecting unit 236 detects the charge amount of the battery that is the power source of the conveyance vehicle. When detecting that the amount of charge falls below a predetermined value, the charge amount detecting unit 236 determines that charging is necessary, records detection information on the decrease in charge amount into the recording unit, and notifies the information to the supervisory control device 4000 and the control device 3000. Furthermore, when detecting that the amount of charge is below the predetermined value, the charge amount detecting unit, in addition to the above process, may automatically move to a charging spot to charge. The above predetermined value for the charge amount detecting unit 236 to determine that charging is required may be a value fixed based on at least one of the distance to the destination set for the conveyance vehicle and the weight of the conveyed object connected to the conveyance vehicle.

The input unit 240 includes a physical switch or touch panel that is mounted on the conveyance vehicle, where the user can directly input operation commands to the conveyance vehicle. The display unit 250 includes, for example, a liquid crystal panel mounted on the conveyance vehicle, and can display the status information of the conveyance vehicle (various detection information of the detecting unit 230, type of travel mode, currently executed operation scenario, etc.).

The control unit 260 has an operation judging unit 261, a mode switching unit 262, a connection controlling unit 263, a display controlling unit 264, a position estimating unit 265, and a travel controlling unit 266. The operation judging unit 261 judges the operation of the conveyance vehicle based on the operation scenario of the own conveyance vehicle provided from the operation scenario managing unit 4020.

The mode switching unit 262 switches the travel mode of the conveyance vehicle between the guided travel mode and the autonomous travel mode, based on the conditions predetermined in the operation scenario or based on the commands fed at the input unit 240. The connection controlling unit 263 controls the operation of the connecting unit 11 to connect to or disconnect from the cart or the conveyed object, based on conditions predetermined in an operation scenario, or based on commands fed at the input unit 240. The display controlling unit 264 controls the input IF of the above input unit 240 and the display unit 250.

The position estimating unit 265 estimates the position of the own conveyance vehicle in the entire traveling area, based on the traveling distance detected by the travel distance detecting unit 233, information on the direction of the own conveyance vehicle detected by the attitude detecting unit 235, and map information of the entire area recorded in the recording unit 220. Alternatively, the position estimating unit may estimate the position of the own conveyance vehicle in the entire traveling area, based on the information of the distance and direction from the own conveyance vehicle to an object measured by the object position detecting unit 12 and the map information of the entire area recorded in the recording unit 220. Alternatively, when the conveyance vehicle is traveling on a guide line composed of two-dimensional codes, the position estimating unit may estimate the position of the conveyance vehicle in the entire traveling area, based on the identification information of the two-dimensional codes and the above map information.

The position estimating unit 265 estimates the position where an object exists, based on the estimated own conveyance vehicle position information and the distance information from the own conveyance vehicle to the object detected by the object position detecting unit 12. The position estimating unit 265 also estimates the placed location of the guide line, based on the own conveyance vehicle position information when the guide line is detected by the guide line detecting unit 16.

The travel controlling unit 266 controls the traveling of the conveyance vehicle, based on at least one of the judgment information by the operation judging unit 261 and the mode switching unit 262. Specifically, the travel controlling unit individually controls the right wheel driving unit 281 and the left wheel driving unit 282 of the wheel driving unit 280. The right wheel driving unit 281 and the left wheel driving unit 282, which are composed of motors for example, control the rotation speed and direction of each driving wheel individually, thereby allowing the conveyance vehicle to travel in a curve at any track radius or to rotate for changing the direction.

### <Map Generation Process>

Hereinafter, the control flow of map preparation implemented by the map managing unit 4030 will be described. Fig. 11 is a flowchart showing the control flow of map preparation according to the embodiment. First, the map managing unit 4030 prepares a map of the operation area, based on the information on object positions generated by the position estimating unit mounted on the conveyance vehicle (S901). Herein, the object to be detected is, for example, a wall that is the outer edge of the operation area and an obstacle inside the operation area.

Next, the map managing unit 4030 acquires position information on the guide line estimated by the position estimating unit by making the conveyance vehicle to travel along the guide line (S902). Herein, the method of traveling along the guide line may be manually operating the conveyance vehicle and utilizing automatic travel control along the guide line.

Next, the map managing unit 4030 integrates the map information including obstacle information generated in S901 with the guide line location information acquired in S902 to generate an integrated map including obstacle locations and guide line locations (S903). In lieu of map integration as in S903, the map information of object positions generated in S901 and the map information of the guide line generated in S902 can be separately recorded without integration into a single map.

Next, the map managing unit 4030 displays the integrated map on the I/O device 5000 and adds the information on the travel mode switching position fed by the user via the I/O device 5000 to the integrated map (S904). In the control flow shown in Fig. 11, the steps S902, S903, and S904 are exemplarily processed in this order; however, the step S904 may be performed in parallel with the steps S902 and S903, and may be performed before the steps S902 and S903. In S904, the map managing unit displays the map generated in S901 onto the I/O device 5000, and the user inputs into the map through the I/O device 5000, information on the travel mode switching position. By executing each of the above steps, the map managing unit 4030 can generate an integrated map that includes location information on obstacles and location information on the guide line, and can register the travel mode switching position into the integrated map.

### <Map Updating Process>

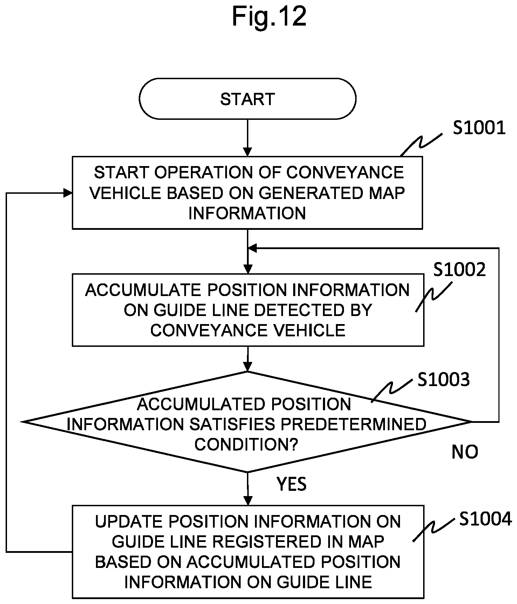

Hereinafter, the control flow of map updating implemented by the map managing unit 4030 will be described. Fig. 12 is a flowchart of the map information updating flow according to the embodiment. First, the conveyance vehicle starts an operation based on the information in the integrated map generated by the map managing unit 4030 (S1001).

Next, the location information of the guide line detected by the conveyance vehicle is accumulated through the operation of the conveyance vehicle (S1002). The location information of the guide line may be accumulated in the status information recording unit 4010 in the supervisory control device 4000, or may be recorded in the recording unit 220 in each conveyance vehicle.

Next, the accumulated amount of the location information on the guide line accumulated in the conveyance system in S1002, is judged whether or not it satisfies the predetermined condition (S1003). Herein, the predetermined condition may be a condition that the accumulated amount exceeds a predetermined threshold value, a condition that detection information on ten or more guide lines is accumulated within a predetermined distance, a condition that the location information is provided by both a single same conveyance vehicle and plural conveyance vehicles, or a condition combined of the above conditions.

In S1003, when the accumulated position information does not satisfy the predetermined condition, the process returns to S1002 and continues to accumulate position information. Otherwise, the process transfers to S1004.

In S1004, the positions of the guide line registered in the map are updated based on the accumulated guide line position information (S1004). After updating the positions of the guide line in S1004, the conveyance vehicle continues the operation through returning to S1001. As an exemplary method of updating the guide line positions, the average coordinate of the accumulated guide line positions can be registered as the updated guide line positions. As another exemplary method, the middle coordinate between the above average coordinate and the positions of the guide line registered in the map may be registered as the updated position of the guide line positions. As further another exemplary method, an approximate straight line (or approximate curve) may be generated based on the accumulated guide line positions, and may be registered as the updated guide line positions.

### <Abnormality Detection Process>

Hereinafter, an example of the abnormality detection process in the abnormality judging unit 4040 will be explained. Fig. 13 is a flowchart of the abnormality judgment process according to the embodiment. First, the conveyance vehicle starts traveling along the guide line in the guided travel mode (S1101). If the condition does not continue that the guide line cannot be detected by the guide line detecting unit for a predetermined distance, the process returns to S1101; otherwise, the process transfers to S1103 (S1102). Herein, the predetermined distance may be set, for example, at a distance of several centimeters to several tens of centimeters.

Next, if the current conveyance vehicle position given by the position estimating unit is not in the vicinity of the placed position of the guide line registered on the map, the process transfers to S1104; otherwise, the process transfers to S 1105 (S1103). Herein, whether or not the vicinity of the registered placed position of the guide line may be judged based on a predetermined distance of a few centimeters, for example.

In S1104, the conveyance vehicle is detected to have deviated from the guide line because of being at a position away from the location of the guide line registered on the map. In addition, a recovery operation is executed to make the conveyance vehicle travel toward the location of the guide line registered on the map and return to the position on the guide line.

In S1105, since the conveyance vehicle is located in the vicinity of the placed position of the guide line registered in the map, the guide line should be able to be detected under normal conditions. Therefore, an abnormality is detected in any part of the conveyance system including the guide line and the conveyance vehicle, the identification information of the conveyance vehicle in which the abnormality was detected, and the location where the abnormality was detected are associatedly recorded in the recording unit 220 or the status information recording unit 4010. Next, if the historical information on traveling of the conveyance vehicle has accumulated to a predetermined amount or more, the process returns to S1101; otherwise, the process transfers to S1107 (S1106). Herein, the state in which the historical information has accumulated to the predetermined amount or more may be defined, for example, that operation in two or more predetermined number of conveyance vehicles has been each performed more than a predetermined number of times at the location where the abnormality was judged.

Next, in S1107, if the above abnormality was detected plural times at the same location (the location within a predetermined distance) by different conveyance vehicles, the process transfers to S1108; otherwise, the process transfers to S1109 (S1107). Herein, an example of detecting the abnormality plural times at the same position with the different conveyance vehicles in S1107 is below: assuming three conveyance vehicles (10A, 10B, and 10C) are operating, the abnormality was detected 10 times at the same position by the conveyance vehicle 10B while the abnormality was detected once at the same position by the conveyance vehicle 10A. Another example is below: the abnormality was detected 5 times at the same position by the conveyance vehicle 10B, the abnormality was detected 5 times at the same position by the conveyance vehicle 10C, and the abnormality was detected once at the same position by the conveyance vehicle 10A. In S1108, since the abnormality was detected plural times at almost the same location by different conveyance vehicles, the abnormality is judged to have occurred on the guide line, and the abnormality information on the guide line and the location information on abnormality occurrence are recorded into the status information recording unit 4010, and outputted to the I/O device 5000. For the guide line composed of a two-dimensional code, examples of abnormalities on the guide line are below: the tape of the two-dimensional code is peeling off and missing, and dirt adhering to the two-dimensional code disables the camera from reading.

Next, in S1109, if an abnormality is detected plural times in a specific conveyance vehicle, the process transfers to S1110; otherwise, the process transfers to the S1111. In S1110, since an abnormality was detected plural time by the specific conveyance vehicle, the abnormality is judged to have occurred in the conveyance vehicle, whereby the abnormality information on the conveyance vehicle and the identification information of the conveyance vehicle in which the abnormality has occurred are recorded into the status information recording unit 4010, and outputted to the I/O device 5000. The abnormalities on the conveyance vehicle are, for example, abnormalities in the guide line detecting unit and a dirty lens portion in the camera.

Next, in S1111, the abnormality is judged not to result from the guide line and the conveyance vehicles but judged to result from other factors, the abnormality information on the other factors is recorded into the status information recording unit 4010, and outputted to the I/O device 5000. An example of the abnormality caused by the other factors is below: that oil has spilled on the floor of the operation area, causing the wheels of the conveyance vehicle to spin, thereby to temporarily deteriorate the detection accuracy of the travel distance by the travel distance detecting unit in the conveyance vehicle. Another example is below: strong light due to lighting in the facility or natural light reflected at the guide line, thus to disable the camera in the guide line detecting unit from detecting the guide line.

### <Other Examples of Abnormality Detection Processing>

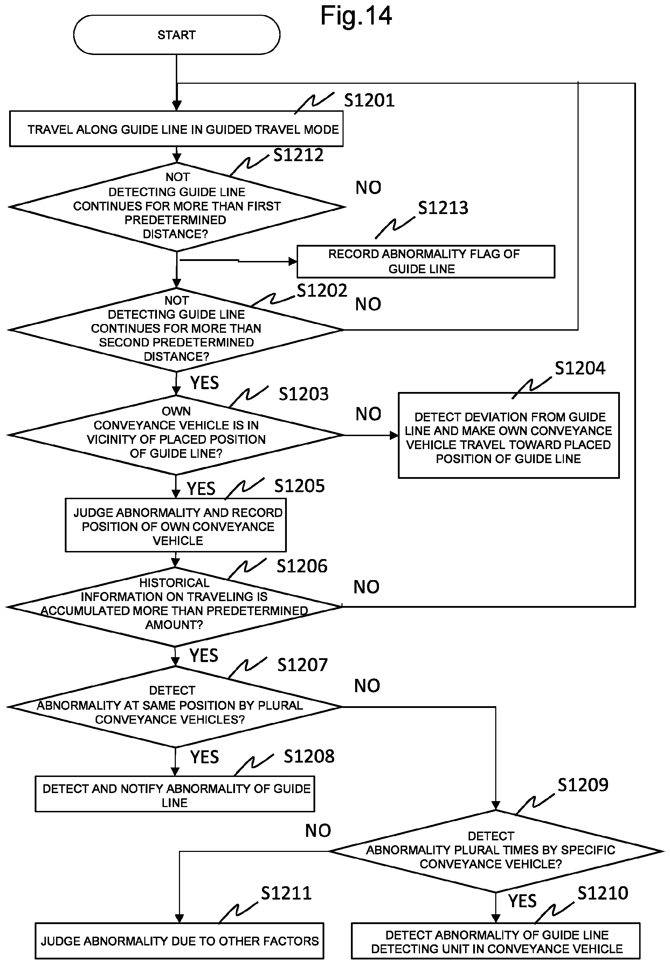

The abnormality detection processing shown in Fig. 13, when the non-detection state of the guide line continues for a predetermined distance or longer in S1102, detects either among below: a deviation from the guide line (S1104), an abnormality of the guide line (S1108), an abnormality of the conveyance vehicle (S1110), and an abnormality due to other factors (S1111). However, when in the guide line occurs a defect that is shorter than the predetermined distance set in S1102, the defect in the guide line cannot be detected, while when in S1102 the predetermined distance is set too short, the conveyance vehicle may frequently detect deviation from the guide line, whereby the recovery operation is frequently implemented. Therefore, a first predetermined distance and a second predetermined distance that are set separately will be described with reference to Fig. 14, where the former is for detecting an abnormality in guide line and recording an abnormality flag while the latter is for detecting deviation from guide line.

Fig. 14 illustrates another example of the abnormality detection process in the abnormality judging unit 4040. The steps from S1201 to S1211 in Fig. 14 are almost identical to those from S1101 to S1111 in Fig. 13, where duplicate explanation will be omitted. In the processing flow shown in Fig. 14, the steps S1212 and S1213 are added between S1201 and S1202. In S1212, when the state of guide line non-detection continues for more than the first predetermined distance, the process transfers to S1213; otherwise, it transfers to S1203. In S1213, the abnormality flag information indicating the possibility of an abnormality in the guide line is recorded in the recording unit 220 or the status information recording unit 4010 in association with the identification information of the conveyance vehicle that detected an abnormal state and the location where the abnormal state was detected.

Herein, the first predetermined distance in S1212 is set to be shorter than the second predetermined distance in S1203. This allows the abnormality flag indicating a small guide line defect to be accumulated in the status information recording unit without frequent recovery operations to the guide line. The 4040 abnormality judging unit judges that an abnormality occurred in guide line, when the abnormality flag information recorded in the status information recording unit is detected at the same location in plural conveyance vehicles, and judges that an abnormality occurred in a specific conveyance vehicle when the abnormality flag is detected plural times in the specific conveyance vehicle.

The embodiment of the present disclosure has been described in detail with reference to the accompanying drawings; the technical scope of the present disclosure is not limited thereto. It is apparent that a person skilled in the art of the present disclosure can conceive various examples of changes or modifications within the scope of the technical idea described in the claims, and it is understood that these also naturally fall within the technical scope of the present disclosure.

The devices described herein may be realized as a single device or as plural devices (for example, cloud servers) connected to a network in part or in whole. For example, the control unit 260 and the recording unit 220 of the conveyance vehicle may be realized by different servers connected each other via a network. In the conveyance system described herein, the control device 3000, the supervisory control device 4000, and the I/O device 5000 are each composed of separate hardware connected via a network; however, some or all of the functions of the control device 3000, supervisory control device 4000, and I/O device 5000 may be implemented in the conveyance vehicle 10.

The series of processes by the devices described herein may be realized using software, hardware, and a combination thereof. Computer programs that realize each function of the control unit 260 according to the embodiment may be prepared to be installed on a PC or other device. Computer-readable recording media in which the above computer programs are stored can also be provided. The recording media are, for example, a magnetic disk, optical disk, magneto-optical disk, and flash memory. The above computer programs may also be delivered, for example, via a network, without using a recording media.

The processes described herein with reference to flowcharts do not necessarily need to advance in the order illustrated. Some steps may advance in parallel. Additional steps may be employed, while some steps may be omitted.

The effects described herein are only descriptive or exemplary and not restrictive. In other words, the technology of the present disclosure may produce other effects that are obvious to those skilled in the art from the description herein, either together with or in place of the above effects.

The following configurations also fall within the technical scope of the present disclosure.

### [item 1]

A conveyance system comprising a conveyance vehicle that conveys an object to be conveyed and a control device that controls operation of the conveyance vehicle,
wherein the conveyance vehicle includes
   a guide line detecting unit that detects a guide line laid along a travel route;
   a travel controlling unit that makes the conveyance vehicle travel along the guide line; and
   an own conveyance vehicle position estimating unit that estimates a position of an own conveyance vehicle; and
the control device includes a recording unit that records map information including position information of the guide line; and makes the conveyance vehicle travel to the guide line in the map information, when the position of the own conveyance vehicle estimated by the own conveyance vehicle estimating unit is more than a predetermined distance away from the position of the guide line in the map information.

### [item 2]

The conveyance system according to item 1,
wherein the control device makes the conveyance vehicle travel to the position of the guide line in the map information, when the guide line detecting unit does not detect the guide line, and the position of the own conveyance vehicle is more than the predetermined distance away from the position of the guide line in the map information.

### [item 3]

The conveyance system according to items 1 or 2,
wherein an abnormality of the conveyance system is detected, when the guide line detecting unit does not detect the guide line and the position of the own conveyance vehicle is in the vicinity of the position of the guide line in the map information.

### [item 4]

The conveyance system according to item 3,
wherein the control device detects an abnormality of the guide line, when difference conveyance vehicles detect the abnormality a plurality of times at a position within a predetermined distance.

### [item 5]

The conveyance system according to items 3 or 4,
wherein the control device detects an abnormality of a specific conveyance vehicle, when the abnormality is detected a plurality of times in the specific conveyance vehicle.

### [item 6]

The conveyance system according to any of items 1-5,
wherein the conveyance vehicle further includes an obstacle detecting unit that detects an obstacle; and
the control device further includes a map managing unit that prepares the map information based on position information of the obstacle detected by the obstacle detecting unit and position information of the guide line detected by the guide line detecting unit.

### [item 7]

The conveyance system according to item 6,
wherein when the position information of the guide line detected by the conveyance vehicle is accumulated, the map managing unit updates the position of the guide line in the map information based on the accumulated position information.

### [item 8]

The conveyance system according to item 7,
wherein when data amount of the accumulated position information exceeds a predetermined threshold, the map managing unit updates the position information of the guide line in the map information.

### [item 9]

A conveyance system comprising a conveyance vehicle that conveys an object to be conveyed and a control device that controls operation of the conveyance vehicle,
wherein the conveyance vehicle includes
   a guide line detecting unit that detects a guide line laid along a travel route;
   a travel controlling unit that makes the conveyance vehicle travel along the guide line; and
   an own conveyance vehicle position estimating unit that estimates a position of an own conveyance vehicle; and
the control device includes
   a recording unit that records map information including position information of the guide line; and
   an abnormality judging unit that detects an abnormality when the guide line detecting unit does not detect the guide line and the position of the own conveyance vehicle estimated by the own conveyance vehicle estimating unit is within a predetermined distance of the position of the guide line in the map information, and
the abnormality judging unit detects an abnormality of the guide line when different conveyance vehicles detect the abnormality at a position within a predetermined distance a plural of times.

### [item 10]

A conveyance system comprising a conveyance vehicle that conveys an object to be conveyed and a control device that controls operation of the conveyance vehicle,
wherein the conveyance vehicle includes
   a guide line detecting unit that detects a guide line laid along a travel route;
   a travel controlling unit that makes the conveyance vehicle travel along the guide line; and
   an own conveyance vehicle position estimating unit that estimates a position of an own conveyance vehicle; and
the control device includes
   a recording unit that records map information including position information of the guide line; and
   an abnormality judging unit that detects an abnormality when the guide line detecting unit does not detect the guide line and the position of the own conveyance vehicle estimated by the own conveyance vehicle estimating unit is within a predetermined distance of the position of the guide line in the map information, and
the abnormality judging unit detects an abnormality of a specific conveyance vehicle when an abnormality is detected in the specific conveyance vehicle a plurality of times.

### [item 11]

A conveyance system comprising a conveyance vehicle that conveys an object to be conveyed and a control device that controls operation of the conveyance vehicle,
wherein the conveyance vehicle includes
   a guide line detecting unit that detects a guide line laid along a travel route;
   a travel controlling unit that makes the conveyance vehicle travel along the guide line;
   an own conveyance vehicle position estimating unit that estimates a position of an own conveyance vehicle; and
   an obstacle detecting unit that detects an obstacle, and
the control device
   includes a recording unit that records map information including position information of the guide line; and
   when the position information of the guide line detected by the conveyance vehicle is accumulated more than a predetermined amount, updates the position information of the guide line in the map information based on the accumulated position information.

### [item 12]

A conveyance method of a conveyance vehicle that conveys an object to be conveyed, comprising:
a step of detecting a guide line laid along a travel route;
a step of making the conveyance vehicle travel along the guide line;
a step of estimating a position of an own conveyance vehicle; and
a step of recording map information including position information of the guide line,
wherein the conveyance vehicle is made to travel to the guide line in the map information, when the position of the own conveyance vehicle estimated by the step of estimating is more than a predetermined distance away from the position of the guide line in the map information.

### [item 13]

A conveyance method of a conveyance vehicle that conveys an object to be conveyed, comprising:
a step of detecting a guide line laid along a travel route;
a step of making the conveyance vehicle travel along the guide line;
a step of estimating a position of an own conveyance vehicle;
a step of recording map information including position information of the guide line; and
a step of detecting an abnormality when the step of detecting the guide line does not detect the guide line and the position of the own conveyance vehicle estimated by the step of estimating is within a predetermined distance of the position of the guide line in the map information,
wherein the step of detecting the abnormality detects an abnormality of the guide line when different conveyance vehicles detect the abnormality at a position within a predetermined distance a plural of times.

### [item 14]

A conveyance method of a conveyance vehicle that conveys an object to be conveyed, comprising:
a step of detecting a guide line laid along a travel route;
a step of making the conveyance vehicle travel along the guide line;
a step of estimating a position of an own conveyance vehicle; and
a step of recording map information including position information of the guide line;
a step of detecting an abnormality when the step of detecting the guide line does not detect the guide line and the position of the own conveyance vehicle estimated by the step of estimating is within a predetermined distance of the position of the guide line in the map information,
wherein the step of detecting the abnormality detects an abnormality of a specific conveyance vehicle when an abnormality is detected in the specific conveyance vehicle a plurality of times.

### [item 15]

A conveyance method of a conveyance vehicle that conveys an object to be conveyed, comprising:
a step of detecting a guide line laid along a travel route;
a step of making the conveyance vehicle travel along the guide line;
a step of estimating a position of an own conveyance vehicle;
a step of detecting an obstacle; and
a step of recording map information including position information of the guide line,
wherein when the position information of the guide line detected by the conveyance vehicle is accumulated, the position information of the guide line in the map information is updated based on the accumulated position information.

### [Reference Signs List]

10 conveyance vehicle, 11 connecting unit, 12 object position detecting unit, 13 driving wheel, 14 non-driving wheel, 16 guide line detecting unit, 17 magnetic sensor, 130 operation area, 131 guide line, 132 travel mode switching position, 210 communication unit, 220 recording unit, 230 detecting unit, 240 input unit, 250 display unit, 260 control unit, 280 wheel driving unit, 2000 cart, 2010 connection receiving unit, 3000 control device, 4000 supervisory control device, 5000 I/O device, 6000 communication network, 7000 external system

## Claims

1. A conveyance system comprising a conveyance vehicle that conveys an object to be conveyed and a control device that controls operation of the conveyance vehicle,
wherein the conveyance vehicle includes
a guide line detecting unit that detects a guide line laid along a travel route;
a travel controlling unit that makes the conveyance vehicle travel along the guide line; and
an own conveyance vehicle position estimating unit that estimates a position of an own conveyance vehicle; and
the control device includes a recording unit that records map information including position information of the guide line; and makes the conveyance vehicle travel to the guide line in the map information, when the position of the own conveyance vehicle estimated by the own conveyance vehicle estimating unit is more than a predetermined distance away from the position of the guide line in the map information.

2. The conveyance system according to claim 1,
wherein the control device makes the conveyance vehicle travel to the position of the guide line in the map information, when the guide line detecting unit does not detect the guide line, and the position of the own conveyance vehicle is more than the predetermined distance away from the position of the guide line in the map information.

3. The conveyance system according to claims 1 or 2,
wherein an abnormality of the conveyance system is detected, when the guide line detecting unit does not detect the guide line and the position of the own conveyance vehicle is in the vicinity of the position of the guide line in the map information.

4. The conveyance system according to claim 3,
wherein the control device detects an abnormality of the guide line, when difference conveyance vehicles detect the abnormality a plurality of times at a position within a predetermined distance.

5. The conveyance system according to claims 3 or 4,
wherein the control device detects an abnormality of a specific conveyance vehicle, when the abnormality is detected a plurality of times in the specific conveyance vehicle.

6. The conveyance system according to any of claims 1-5,
wherein the conveyance vehicle further includes an obstacle detecting unit that detects an obstacle; and
the control device further includes a map managing unit that prepares the map information based on position information of the obstacle detected by the obstacle detecting unit and position information of the guide line detected by the guide line detecting unit.

7. The conveyance system according to claim 6,
wherein when the position information of the guide line detected by the conveyance vehicle is accumulated, the map managing unit updates the position of the guide line in the map information based on the accumulated position information.

8. The conveyance system according to claim 7,
wherein when data amount of the accumulated position information exceeds a predetermined threshold, the map managing unit updates the position information of the guide line in the map information.

9. A conveyance system comprising a conveyance vehicle that conveys an object to be conveyed and a control device that controls operation of the conveyance vehicle,
wherein the conveyance vehicle includes
a guide line detecting unit that detects a guide line laid along a travel route;
a travel controlling unit that makes the conveyance vehicle travel along the guide line; and
an own conveyance vehicle position estimating unit that estimates a position of an own conveyance vehicle; and
the control device includes
a recording unit that records map information including position information of the guide line; and
an abnormality judging unit that detects an abnormality when the guide line detecting unit does not detect the guide line and the position of the own conveyance vehicle estimated by the own conveyance vehicle estimating unit is within a predetermined distance of the position of the guide line in the map information, and
the abnormality judging unit detects an abnormality of the guide line when different conveyance vehicles detect the abnormality at a position within a predetermined distance a plural of times.

10. A conveyance system comprising a conveyance vehicle that conveys an object to be conveyed and a control device that controls operation of the conveyance vehicle,
wherein the conveyance vehicle includes
a guide line detecting unit that detects a guide line laid along a travel route;
a travel controlling unit that makes the conveyance vehicle travel along the guide line; and
an own conveyance vehicle position estimating unit that estimates a position of an own conveyance vehicle; and
the control device includes
a recording unit that records map information including position information of the guide line; and
an abnormality judging unit that detects an abnormality when the guide line detecting unit does not detect the guide line and the position of the own conveyance vehicle estimated by the own conveyance vehicle estimating unit is within a predetermined distance of the position of the guide line in the map information, and
the abnormality judging unit detects an abnormality of a specific conveyance vehicle when an abnormality is detected in the specific conveyance vehicle a plurality of times.

11. A conveyance system comprising a conveyance vehicle that conveys an object to be conveyed and a control device that controls operation of the conveyance vehicle,
wherein the conveyance vehicle includes
a guide line detecting unit that detects a guide line laid along a travel route;
a travel controlling unit that makes the conveyance vehicle travel along the guide line;
an own conveyance vehicle position estimating unit that estimates a position of an own conveyance vehicle; and
an obstacle detecting unit that detects an obstacle, and
the control device
includes a recording unit that records map information including position information of the guide line; and
when the position information of the guide line detected by the conveyance vehicle is accumulated more than a predetermined amount, updates the position information of the guide line in the map information based on the accumulated position information.

12. A conveyance method of a conveyance vehicle that conveys an object to be conveyed, comprising:
a step of detecting a guide line laid along a travel route;
a step of making the conveyance vehicle travel along the guide line;
a step of estimating a position of an own conveyance vehicle; and
a step of recording map information including position information of the guide line,
wherein the conveyance vehicle is made to travel to the guide line in the map information, when the position of the own conveyance vehicle estimated by the step of estimating is more than a predetermined distance away from the position of the guide line in the map information.

13. A conveyance method of a conveyance vehicle that conveys an object to be conveyed, comprising:
a step of detecting a guide line laid along a travel route;
a step of making the conveyance vehicle travel along the guide line;
a step of estimating a position of an own conveyance vehicle;
a step of recording map information including position information of the guide line; and
a step of detecting an abnormality when the step of detecting the guide line does not detect the guide line and the position of the own conveyance vehicle estimated by the step of estimating is within a predetermined distance of the position of the guide line in the map information,
wherein the step of detecting the abnormality detects an abnormality of the guide line when different conveyance vehicles detect the abnormality at a position within a predetermined distance a plural of times.

14. A conveyance method of a conveyance vehicle that conveys an object to be conveyed, comprising:
a step of detecting a guide line laid along a travel route;
a step of making the conveyance vehicle travel along the guide line;
a step of estimating a position of an own conveyance vehicle; and
a step of recording map information including position information of the guide line;
a step of detecting an abnormality when the step of detecting the guide line does not detect the guide line and the position of the own conveyance vehicle estimated by the step of estimating is within a predetermined distance of the position of the guide line in the map information,
wherein the step of detecting the abnormality detects an abnormality of a specific conveyance vehicle when an abnormality is detected in the specific conveyance vehicle a plurality of times.

15. A conveyance method of a conveyance vehicle that conveys an object to be conveyed, comprising:
a step of detecting a guide line laid along a travel route;
a step of making the conveyance vehicle travel along the guide line;
a step of estimating a position of an own conveyance vehicle;
a step of detecting an obstacle; and
a step of recording map information including position information of the guide line,
wherein when the position information of the guide line detected by the conveyance vehicle is accumulated, the position information of the guide line in the map information is updated based on the accumulated position information.
